# EUROPEAN PATENT APPLICATION

(11) **EP 4 545 408 A1**
(43) Date of publication of application: **30.04.2025**
(21) Application number: 23205946.9
(22) Date of filing: 26.10.2023
(51) Int. Cl.: B64D 11/00, B64D 11/06, B64D 47/00

(54) **AIRCRAFT WITH MIRROR FOR CABIN SURVEILLANCE**

(71) Applicant: Airbus Operations GmbH, 21129 Hamburg (DE)
(72) Inventor: Sobeck, Frederik, 21129 Hamburg (DE); Hadamek, Rainer, 21129 Hamburg (DE); Lewandowski, Karin, 21129 Hamburg (DE)

(57) **Abstract**

An aircraft has an aircraft cabin, which comprises a passenger compartment having a plurality of passenger seats; a flight crew compartment having a flight attendant seat; and a mirror installed within the flight crew compartment and configured to reflect a live view of the passenger seats to the flight attendant seat.

## Description

The present invention pertains to an aircraft equipped with a mirror for cabin surveillance.

As per certification specifications, it may be required for a cabin attendant to have visual sight of the aisle of an aircraft and also sight of at least 50% of the passengers. This may in particular apply to critical phases of a flight, including take-off and landing. During these critical phases, the cabin attendants usually have to remain at respective flight attendant seats while being capable of monitoring the passenger seats in accordance with the above-cited regulation requirements. Due to these requirements the crew attendant seats may have to be located appropriately within the cabin and to be oriented toward certain cabin areas that are to be monitored.

To enable the cabin attendant to be seated against flight direction for better space usage in the rear end of the aircraft opposite of the galleys, a monitoring system using a camera for passenger and aisle surveillance may be used. The camera view may then displayed on a monitor at the galley end of the cabin opposite to the flight attendant. See, for example, document EP 3 606 818 B1 for an example of such a cabin monitoring system.

Against this background, it is an object of the present invention to find a solution for cabin surveillance with less complexity and with reduced costs.

This object is achieved by an aircraft having the features of claim 1.

According to the invention, an aircraft has an aircraft cabin, which comprises a passenger compartment having a plurality of passenger seats; a flight crew compartment having a flight attendant seat; and a mirror installed within the flight crew compartment and configured to reflect a live view of the passenger seats to the flight attendant seat.

Thus, one idea of the present invention is to use a simple mirror within the flight crew compartment to deflect and guide a current view of the passenger cabin towards the eyes of a flight attendant sitting on the flight attendant seat. The mirror may be installed and/or mounted basically in any position within the flight crew compartment that is suitable for the present purpose. In that vein the mirror may amongst others replace a monitor conventionally installed at the back wall of a galley at a rear end of an aircraft.

The mirror may be provided as a standalone device that is mounted to a wall, to a ceiling, to a monument (e.g. a galley component) or any other structural element of the aircraft cabin. The mirror may be fixedly attached to the respective structure such that it cannot change its position. In other embodiments, the mirror may be attached and/or hinged via one or several movable joints, e.g. a rotary joint, a swivel/folding arm and so on, such that its position may be changed depending on the current situation and/or the current needs of the flight crew. Moreover, the mirror may be configured such that it can be stowed away within cabin/monument walls or ceiling more or less entirely.

Alternatively, the mirror may not be a separate component but may instead form a surface or a portion of a surface of a cabin structure, e.g. of a cabin wall or a wall of a cabin monument, and/or may be integrated in it.

The present solution reduces complexity compared to the standard monitor-based solutions, e.g. where the monitor is part of a galley. Additionally the impact on the further installation, e.g. laying of pipes, wires etc., can be reduced or completely eliminated, allowing for a more standardized cabin installation, cost savings for engineering and production as well as lower maintenance due to higher communality in the fleet. Less or less complex parts also reduce weight, complexity and the risk of failures/maintenance work.

Advantageous embodiments and improvements of the present invention are found in the subordinate claims.

According to an embodiment of the invention, the aircraft cabin may further comprise at least one partition wall separating the flight crew compartment from the passenger compartment such that a passageway is formed connecting the flight crew compartment with the passenger compartment. The mirror may be configured to reflect the live view of the passenger seats as visible from the flight crew compartment through the passageway.

This is thus a particularly simple variant of the present invention. In this case, a cabin attendant sitting on the flight attendant seat is able to monitor directly at least a portion of the passenger compartment as it is visible through the passageway between passenger compartment and flight crew compartment. This embodiment in principle does not require any electronic equipment whatsoever, i.e. no monitor(s), no camera(s) etc.

According to an embodiment of the invention, the mirror may be configured as a one-way mirror to reflect the live view from the passenger compartment to the flight crew compartment but not a view from the flight crew compartment to the passenger compartment.

It is hence possible to restrict the view from the passenger compartment to the flight attendant sitting on the flight attendant seat. Utilization of a one-way mirror may generally help to prevent any unwanted views into the flight crew compartment by the passengers residing in the passenger compartment.

According to an embodiment of the invention, the aircraft cabin may further comprise a video surveillance device installed within the passenger compartment and configured to capture the live view of the passenger seats within the passenger compartment. The aircraft cabin may further comprise a monitor installed within the flight crew compartment and configured to display the live view as captured by the video surveillance device. The mirror may be configured to reflect the live view of the passenger seats displayed on the monitor.

In this alternative embodiment, the mirror is combined with a monitor and a surveillance device like a camera or the like. The video surveillance device takes a live video of the interior of the passenger compartment, which is then displayed by the monitor within the flight crew compartment and forwarded from there to the flight attendant seat via the mirror. In that case the mirror is thus used to redirect the live view as shown on the monitor. This has the significant consequence that the monitor may be installed in a more suitable position than usually, e.g. to save installation effort and costs due to less required electrical and mechanical installations etc.

According to an embodiment of the invention, the video surveillance device may be installed on or adjacent to a partition wall within the passenger compartment separating the flight crew compartment from the passenger compartment. Alternatively, or additionally, the monitor may be installed on or adjacent to the partition wall within the flight crew compartment.

In this exemplary embodiment, the monitor is thus installed close to the flight attendant at the partition wall. This is contrary to the standard solutions where the monitor is usually provided at a read-end wall of a galley, that is, at the opposite wall of the flight crew compartment. This adapted installation helps to significantly reduce installation complexity compared to conventional solutions, as for example described in prior art document EP 3 606 818 E1.

For example, attaching the monitor on the wall where the cabin attendant's seat is mounted simplifies wiring and (electrical) installation through the wall. Moreover, less mechanical parts may be used, which would otherwise be needed for a hinge mechanism to store the monitor inside a galley for example. This in effect reduces weight, complexity and the risk of failures/maintenance work.

According to an embodiment of the invention, the flight attendant seat may be mounted to the partition wall within the flight crew compartment. The monitor may be installed on the partition wall above or adjacent to the flight attendant seat. The mirror may be installed oppositely to the monitor and to the flight attendant seat within the flight crew compartment.

For example, the monitor may be installed at the wall or ceiling directly above the flight attendant seat. The mirror may then be installed diametrically opposed at the opposite wall of the flight crew compartment, for example on a galley wall or monument, e.g. in a foldable arrangement such that it can be stowed away in the galley.

According to an embodiment of the invention, the mirror and/or the monitor may be configured to provide a live view of the passenger seats that is not mirror-inverted.

In a variant of the invention where a mirror is combined with a monitor, the monitor may display the live view in a suitable orientation so that the view as reflected by the mirror comes out in a non-inverted way. However, alternatively, also a noninverting mirror may be used for this purpose.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.
Fig. 1 schematically depicts a top view of an aircraft cabin of an aircraft according to an embodiment of the invention.
Fig. 2 schematically depicts a top view of an aircraft cabin of an aircraft according to another embodiment of the invention.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

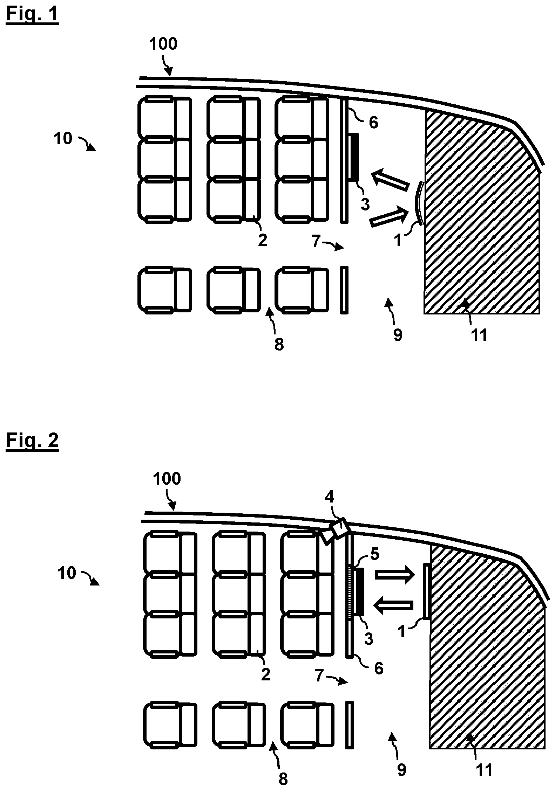

Figures 1 and 2 respectively depict top views of an aircraft cabin 10 of an aircraft 100 according to embodiments of the invention.

The aircraft 100 may be, for example, a single aisle passenger aircraft. Both figures depict a rear end of the respective aircraft 100. As can be seen in these figures, the aircraft 100 comprises a passenger compartment 8 with a plurality of passenger seats 2 and a flight crew compartment 9 with a flight attendant seat 3. Both compartments 8, 9 are separated by several partition walls 6, whereby a passageway 7 is formed along the aisle that connects the flight crew compartment 9 with the passenger compartment 8 in the usual manner. The flight crew compartment 9 may include a galley 11 for example. It is to be understood that the depicted arrangement is merely an example. It will be clear to the person of skill that the invention can be used in various other cabin configurations. It is also clear that more than one flight attendant seat 3 could be provided within the flight crew compartment 9.

For passenger transportation, regulations usually require that at least a certain percentage of the passenger seats 2 must be visible by cabin attendants, in particular under critical phases of a flight like take-off and landing phases. The cabin attendants have to remain at respective flight attendant seats 3 (as the one exemplary shown in the figures) while being capable of monitoring the passenger seats 2 in accordance with the above-cited regulation requirements.

At the depicted rear end of the aircraft 100, the cabin attendants are conventionally seated against flight direction for better space usage in the rear end of the aircraft 100, as the galley 11 is arranged at the opposite end. As it is difficult or at least inconvenient for the cabin attendants to monitor the passenger compartment 8 from such a position, a monitoring system is typically installed within a cabin including a monitor mounted at the galley, which displays a live view of the passenger seats 2. These systems are typically rather complex and expensive, as the electrical installation needs to be provided between one or several cameras in the passenger compartment 8 and the monitor in the galley 11. In addition, the necessary mechanical provisions further increase the costs and weight of such conventional installations.

The present solution offers a simple alternative to such complex arrangements by relying on a simple mirror 1 within the flight crew compartment 9 that is configured to reflect a live view of the passenger seats 2 to the flight attendant seat 3 so that a cabin attendant sitting on the seat 3 is able to monitor the passenger compartment 8 at any time despite sitting with the back to it.

In both embodiments, the mirror 1 provides the means for a flight attendant to monitor the passenger compartment 8 of the cabin 10 from the adjacent flight crew compartment 9. In the embodiment of Fig. 1, the mirror 1 is specifically configured to reflect the live view of the passenger seats 2 as visible from the flight crew compartment 9 through the passageway 7. To this achieve this, the mirror 1 is adequately mounted at the rear end of the flight crew compartment 9 opposite to the flight attendant seat 3 with a certain lateral offset to it.

To this end, the mirror 1 may be fixedly or movably mounted to any structural element within the flight crew compartment 9. For example, the mirror 1 may be attached to an outer wall of a galley monument. In another example, the mirror 1 may be hinged to the galley 11, e.g. via a rotary joint or a swivel arm. It may be even possible to fold and/or stow away the mirror 1 by such means, e.g. within a galley monument or a cabin wall/ceiling.

However, the person of skill will readily conceive various other suitable variants for the installation and configurations of such a mirror 1. For example, a surface and/or surface portion within the flight crew compartment 9 may be configured to function as the mirror 1.

To limit the view of passengers from the passenger compartment 8 into the flight crew compartment 9, the mirror 1 may be configured as a one-way mirror to reflect the live view from the passenger compartment 8 to the flight crew compartment 9 but not vice versa.

The embodiment of Fig. 1 is thus particularly simple and cost-effective as it relies on a single mirror for the surveillance of the passenger compartment 8. The alternative embodiment of Fig. 2 on other hand offers a compromise with respect to conventional systems known from the prior art based on surveillance cameras and monitors.

As can be seen in Fig. 2, the aircraft cabin 10 in this case comprises a video surveillance device 4, e.g. one or several cameras, installed within the passenger compartment 8 and configured to capture the live view of the passenger seats 2 within the passenger compartment 8, as it is also known in the prior art. The aircraft cabin 10 further comprises a monitor 5 installed within the flight crew compartment 9 and configured to display the live view as captured by the video surveillance device 4. Also in this embodiment, the mirror 1 is provided at the galley 11 end of the aircraft cabin 10 opposite the flight attendant seat 3 and is configured to reflect the live view of the passenger seats 2 as displayed on the monitor 5.

Contrary to the prior art solutions, the monitor 5 is presently installed on or adjacent to the partition wall 6 within the flight crew compartment 9. More specifically, the monitor 5 is installed on the partition wall 6 above or adjacent to the flight attendant seat 4, which is mounted to the partition wall 6 within the flight crew compartment 9 (and thus not, as in the prior art, on the rear-end of the compartment 9 at the galley 11). The video surveillance device 4 on the other hand is installed on or adjacent to the partition wall 6 within the passenger compartment 8, that is, on the other side of the partition wall 6.

In case that the monitor 5 is placed above the flight attendant seat 3, the mirror 1 may be installed diametrically opposite to the monitor 5 and to the flight attendant seat 3 on the galley 11. This arrangement of the mirror 1 opposite of the flight attendant seat 3 makes it possible for a cabin attendant sitting on the seat 3 to still see the sight of the passenger compartment 8 displayed on the monitor 5 without any limitations in comfort.

The arrangement of Fig. 2 allows for a simplified installation of the electrical infrastructure (e.g. connections through the partition wall 6 between the video surveillance device 4 and the monitor 5), in particular compared to an installation of the monitor 5 as part of the galley 11. Additionally, the impact on the galley 11 with regards to the laying of pipes and wires and so on as well as mechanical mounts is reduced or even eliminated, allowing for a more standardized galley. In other words, also in this embodiment complexity, costs and weight can be saved compare to the prior art.

Both solutions described with respect to Figs. 1 and 2 are thus simpler and more cost-effective than the prior art variants while still allowing for sufficient surveillance of the passengers in the passenger compartment 8.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification. The embodiments were chosen and described in order to best explain the principles of the invention and its practical applications, to thereby enable others skilled in the art to best utilize the invention and various embodiments with various modifications as are suited to the particular use contemplated.

### List of reference signs

- 1: mirror
- 2: passenger seat
- 3: flight attendant seat
- 4: video surveillance device
- 5: monitor
- 6: partition wall
- 7: passageway
- 8: passenger compartment
- 9: flight crew compartment
- 10: aircraft cabin
- 11: galley
- 100: aircraft

## Claims

1. Aircraft (100) having an aircraft cabin (10), the aircraft cabin (10) comprising:
a passenger compartment (8) having a plurality of passenger seats (2);
a flight crew compartment (9) having a flight attendant seat (3); and
a mirror (1) installed within the flight crew compartment (9) and configured to reflect a live view of the passenger seats (2) to the flight attendant seat (3).

2. Aircraft (100) according to claim 1, the aircraft cabin (10) further comprising:
at least one partition wall (6) separating the flight crew compartment (9) from the passenger compartment (8) such that a passageway (7) is formed connecting the flight crew compartment (9) with the passenger compartment (8);
wherein the mirror (1) is configured to reflect the live view of the passenger seats (2) as visible from the flight crew compartment (9) through the passageway (7).

3. Aircraft (100) according to claim 2, wherein the mirror (1) is configured as a one-way mirror to reflect the live view from the passenger compartment (8) to the flight crew compartment (9) but not a view from the flight crew compartment (9) to the passenger compartment (8).

4. Aircraft (100) according to claim 1, the aircraft cabin (10) further comprising:
a video surveillance device (4) installed within the passenger compartment (8) and configured to capture the live view of the passenger seats (2) within the passenger compartment (8); and
a monitor (5) installed within the flight crew compartment (9) and configured to display the live view as captured by the video surveillance device (4); wherein the mirror (1) is configured to reflect the live view of the passenger seats (2) displayed on the monitor (5).

5. Aircraft (100) according to claim 4, wherein at least one of:
the video surveillance device (4) is installed on or adjacent to a partition wall (6) within the passenger compartment (8) separating the flight crew compartment (9) from the passenger compartment (8); and
the monitor (5) is installed on or adjacent to the partition wall (6) within the flight crew compartment (9).

6. Aircraft (100) according to claim 5, wherein the flight attendant seat (3) is mounted to the partition wall (6) within the flight crew compartment (9), wherein the monitor (5) is installed on the partition wall (6) above or adjacent to the flight attendant seat (4), wherein the mirror (1) is installed oppositely to the monitor (5) and to the flight attendant seat (3) within the flight crew compartment (9).

7. Aircraft (100) according to one of the claims 1 to 6, wherein at least one of the mirror (1) and the monitor (5) is configured to provide a live view of the passenger seats (2) that is not mirror-inverted.
